# EUROPEAN PATENT SPECIFICATION

(11) **EP 0 446 192 B1**
(45) Date of publication and mention of the grant of the patent: **11.08.1993**
(21) Application number: 91850049.7
(22) Date of filing: 01.03.1991
(51) Int. Cl.: C02F 3/20, B01F 3/04

(54) **A device for turbine aerators**
Vorrichtung für Turbinenbelüfter
Dispositif pour les aérateurs à turbine

(30) Priority: 06.03.1990 SE 9000778
(43) Date of publication of application: 11.09.1991
(73) Proprietor: ITT FLYGT AB, S-171 25 Solna (SE)
(72) Inventor: Fombertasse, Marcel, F-78990 Elancourt (FR); Ramel, Chistian, F-92800 Puteaux (FR)
(74) Representative: Larsson, Sten

(56) References cited:
- CH-A- 294 349
- GB-A- 1 410 890

## Description

The invention concerns a device to be used with turbine aerators for aeration and cleaning of waste water.

The Swedish patent publication 398 447 shows a self priming aeration device for liquids which operates entirely lowered into the liquid and which comprises a hollow turbine impeller having a number of blades or vanes. The latter being provided with backwards directed air outlets around their perimeters and vertical surfaces in front of these outlets. Said surfaces forming peak angles with the impeller radii going through the vane tips. The turbine impeller is surrounded by a housing with vanes forming angles with the radius and arranged between two flat rings. The shaft of the turbine impeller is hollow and connected to an air intake pipe.

During rotation the turbine impeller creates a central underpressure which sucks liquid into the housing and throws it towards the periphery. The created underpressure sucks in air through the air pipe, which air flows through the openings in the vanes, mixes with the liquid and is thrown radially outwards from the housing in the shape of very small bubbles. Said bubbles add oxygen to the liquid and transport pollutions on their way up to the surface, so-called flotation.

If the treated liquid contains amounts of pollutions such as elongated fibres, there might be clogging problems within the turbine impeller. The fibres easily wind up around the hub, which increases the power demand and can also cause stoppings. This problem is solved by help of the device stated in the claims.

The invention is disclosed more closely below with reference to a drawing which shows a turbine aerator provided with the device according to the invention

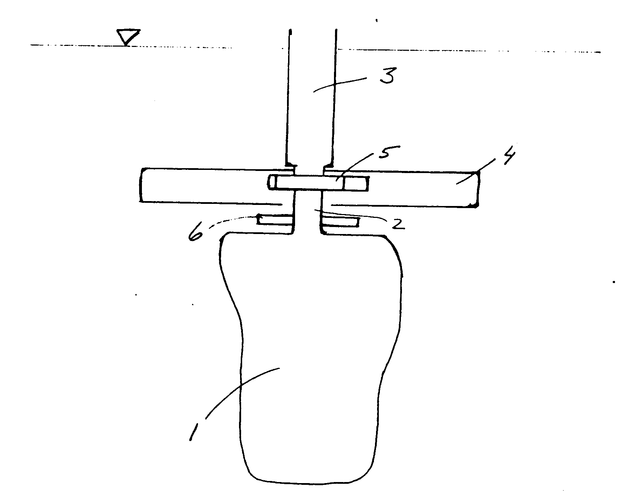

In the drawing 1 stands for an electric motor, 2 a rotary shaft, 3 air inlet, 4 a turbine housing with an impeller 5. 6 finally, stands for a separate impeller.

The aerator operates in the following manner:
The entire device is lowered into the liquid that should be treated. The motor rotates the impeller 5 via the shaft 2. Water is sucked into the housing 4 and is thrown outwards by the vanes 5 of the impeller. The under pressure thus created sucks air through the air connection 3 down into the inner of the impeller 5, the air leaving the impeller through the openings in the vanes, being mixed with the liquid and leaving the turbine in the shape of very small bubbles.

In order to diminish the problems with pollutions being collected on the shaft below the impeller 5, a separate impeller 6 is arranged on the shaft somewhat below the turbine impeller, outside of the housing 4. During rotation this impeller 6 creates a flow away from the shaft 2 and from the inlet of the housing. This flow brings away the heavier pollutions that can clog the machine.

The impeller 6 is preferably designed with backwards swept vanes for diminishing the risk that fibres should stick to it. In addition the impeller is so dimensioned that outgoing flow is limited with regard to the incoming flow created by the turbine impeller 5. The dimensioning of the impeller 6 can be used to obtain a suitable relation between water and air in the turbine. A bigger impeller means a smaller amount of water as compared with the amount of air and vice versa.

## Claims

1. A device for a submersible turbine aerator comprising a turbine impeller rotating within a housing, the inner of said impeller being connected to air and which sucks surrounding liquid axially into the housing for mixing it with outflowing air, the water/air mixture being fed radially from the housing, characterized in that an outer impeller (6) is arranged on the driving shaft (2) of the impeller (5) in front of the latter and outside of the housing (4), said outer impeller (6) creating an additional flow away from the shaft (2) and the inlet of the housing for diverting of pollutions in the liquid.

2. A device according to claim 1, characterized in that the impeller (6) is arranged on an elongated part of the hub of the turbine impeller (5).

3. A device according to claim 1, characterized in that the vanes of the impeller (6) are swept backwards.

## Patentansprüche

1. Vorrichtung für einen tauchbaren Turbinenbelüfter, mit einem in einem Gehäuse umlaufenden Turbinen-Laufrad, wobei das Innere des Laufrads mit Luft verbunden ist und in der Umgebung befindliche Flüssigkeit axial in das Gehäuse ein-gesaugt wird und mit ausströmen.der Luft gemischt wird, wobei die Wasser-/Luft-Mischung radial aus dem Gehäuse ausgeleitet wird,
dadurch gekennzeichnet, daß ein äußeres Laufrad (6) auf der Antriebswelle (2) des Laufrads (5) vor diesem und außerhalb des Gehäuses (4) angeordnet ist, wobei das äußere Laufrad (6) eine zusätzliche, von der Welle (2) und dem Einlaß des Gehäuses weg führende Strömung zum Weglenken von in der Flüssigkeit vorhandenen Verunreinigungen erzeugt.

2. Vorrichtung nach Anspruch 1,
dadurch gekennzeichnet, daß das Laufrad (6) auf einem Verlängerungsteil der Nabe des Turbinen-Laufrads (5) angeordnet ist.

3. Vorrichtung nach Anspruch 1,
dadurch gekennzeichnet, daß die Flügel des Laufrads (6) nach hinten gekrümmt sind.

## Revendications

1. Dispositif pour un aérateur à turbine submersible comportant une roue de turbine tournant à l'intérieur d'un boîtier, l'intérieur de cette roue étant relié à l'air et aspirant axialement le liquide qui l'entoure pour le mélanger avec de l'air sortant, le mélange eau/air étant alimenté radialement depuis le boîtier, caractérisé en ce qu'une roue externe (6) est agencée sur l'arbre d'entraînement (2) de la roue (5), devant cette dernière et à l'extérieur du boîtier (4), ladite roue externe créant un écoulement additionnel qui s'éloigne de l'arbre (2) et de l'entrée du boîtier pour éloigner les polluants du liquide.

2. Dispositif selon la revendication 1, caractérisé en ce que la roue (6) est agencée sur une partie allongée du moyeu de la roue (5) de turbine.

3. Dispositif selon la revendication 1, caractérisé en ce que les aubes de la roue (6) sont échancrées vers l'arrière.
